# EUROPÄISCHE PATENTSCHRIFT

(11) **EP 1 021 999 B1**
(45) Veröffentlichungstag und Bekanntmachung des Hinweises auf die Patenterteilung: **30.05.2007**
(21) Anmeldenummer: 99810053.1
(22) Anmeldetag: 22.01.1999
(51) Int. Cl.: A61C 13/265

(54) **Verankerung für Dentalprothetik**
Anchor for dental prosthesis
Attachement pour prothèse dentaire

(43) Veröffentlichungstag der Anmeldung: 26.07.2000
(73) Patentinhaber: CENDRES ET METAUX S.A., CH-2501 Bienne (CH)
(72) Erfinder: Blümli, Markus, 2503 Biel (CH); Buchholz, Alexis, 2068 Hauterive (CH); Kaufmann, Heiner, 3073 Gümligen b. Bern (CH)
(74) Vertreter: AMMANN PATENTANWÄLTE AG BERN

(56) Entgegenhaltungen:
- CH-A- 380 292
- CH-A- 633 440
- US-A- 4 573 923

## Beschreibung

Die vorliegende Erfindung bezieht sich auf eine Verankerung für die Dentalprothetik gemäss Oberbegriff von Patentanspruch 1. Eine solche Verankerung wird vom Anmelder als Resilienzverankerung nach Dr. Dalla Bona unter dem Handelsnamen DALBO vertrieben. Bei Resilienzverankerungen mit einem Kugelkopf ist es relativ schwierig, die Retentionskraft einzustellen und es wurden verschiedene Wege dazu eingeschlagen, unter anderem auch durch die Verwendung von Kugeln, die unter Federkraft stehen. In einem der auf dem Markt befindlichen Ausführungsbeispielen besitzt die Matrize Lamellen.

Es ist von diesem bekannten Stand der Technik ausgehend Aufgabe der vorgehenden Erfindung, eine Resilienzverankerung mit Kugelkopf derart zu verbessern, dass eine leicht und sicher einstellbare Retention erzielt werden kann. Diese Aufgabe wird mit einer Verankerung gemäss Patentanspruch 1 gelöst. Weitere Ausbildungen der Erfindung sind in den abhängigen Ansprüchen definiert.

Die Erfindung wird im folgenden anhand von Ausführungsbeispielen näher erläutert.
- Fig. 1: zeigt eine Kugelkopfpatrize,
- Fig. 2: zeigt in perspektivischer Sicht einen Lamelleneinsatz gemäss Erfindung,
- Fig. 3: zeigt in einem Schnitt ein erstes Ausführungsbeispiel einer Matrize gemäss der Erfindung, und
- Fig. 4: zeigt in einem Schnitt ein zweites Ausführungsbeispiel einer Matrize gemäss der Erfindung.

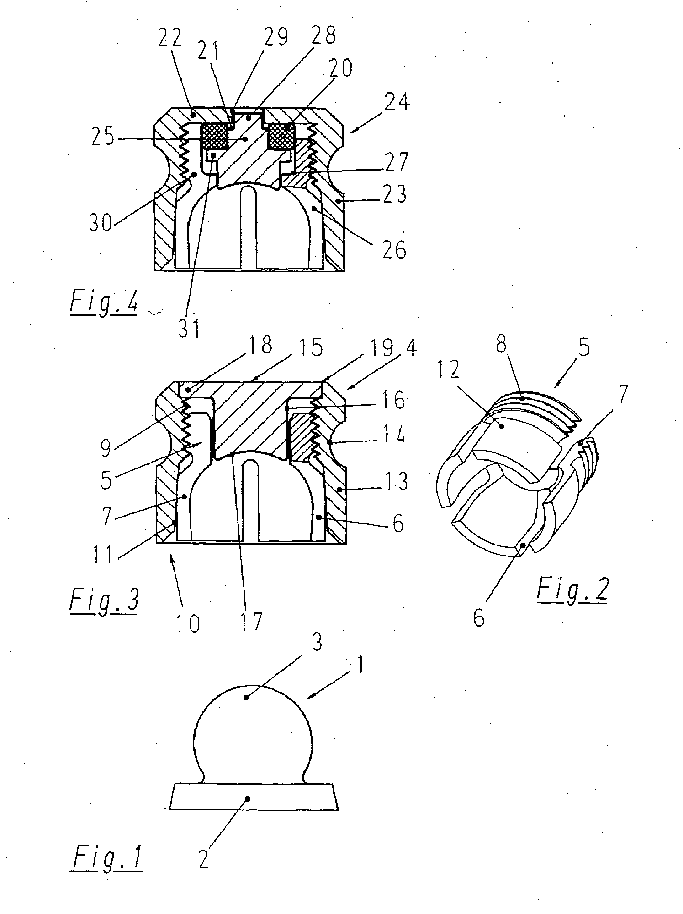

Figur 1 zeigt eine Patrize 1, die einen Sockel 2 zum Befestigen an eine Wurzelkappe, z.B. durch Angiessen, Anlöten, Anschweissen oder Einkleben und als Retentionsstift einen Kugelkopf 3 aufweist. Die Patrize kann im Prinzip aus einer beliebigen für die Dentaltechnik verwendbaren Legierung oder für Modellierzwecke aus Kunststoff hergestellt werden, vorzugsweise jedoch aus einer palladium- und kupferfreien, angussfähigen Legierung oder Reintitan.

Figur 2 stellt einen in eine Matrize 4 eindrehbaren Lamelleneinsatz 5 dar, der in vorliegendem Ausführungsbeispiel drei nicht durchgehende Schlitze 6 und einen durchgehenden Schlitz 7 aufweist, um vier Lamellen zu ergeben. Der durchgehende Schlitz dient dem Zusammenzug des ganzen Lamelleneinsatzes während die Schlitze der Kompression desselben dienen. Der Lamelleneinsatz weist ferner ein Gewinde 8 auf und ist aus einem der oben angegebenen Metalle oder Metallegierungen angefertigt.

Die in den Figuren 3 oder 4 dargestellte Matrize 4 oder 24 weist ein dem Gewinde 8 entsprechendes Innengewinde 9 auf, wodurch der Lamelleneinsatz eindrehbar bzw. einschraubbar ist. Zwischen dem inneren Ende des Gewindes und dem freien Ende 10 der Matrize ist die innere Matrizenfläche 11 konisch bezüglich der Aussenfläche gebildet, mit zum Innengewinde hin sich verengenden Innendurchmesser. Dadurch werden die Lamellen des Retentionsteils 12 des Lamelleneinsatzes 5 beim Hineindrehen in die Matrize nach einwärts gebogen, wodurch die auf den Kugelkopf wirkende Retentionskraft stufenlos eingestellt, bzw. in diesem Falle erhöht werden kann.

Die in Figur 3 dargestellte Matrize 4 enthält ein als im wesentlichen als geschlossene Kappe ausgebildetes Gehäuse 13, wobei das Gehäuse der Matrize aus den vorgenannten Metallen oder Metallegierungen hergestellt sein kann. Das Gehäuse weist ferner aussen eine umlaufende Retentionsnut 14 auf, die dazu dient, die Verankerung des Gehäuses nach dem Einpolymerisieren oder Einkleben in der Prothese zu unterstützen. Das Gehäuse kann ferner Einkerbungen oder Nuten zur Drehsicherung aufweisen.

Im Gehäuse ist ferner ein Anschlagstück 15 angeordnet, das einen zylindrischen Körper 16 mit einer sphärischen Oberfläche 17 aufweist, die als Anschlag für den Patrizen-Kugelkopf dient, wodurch eine genaue und stets gleiche Position des Kugelkopfes in der Matrize gewährleistet ist. Im Ausführungsbeispiel von Figur 3 weist das Anschlagstück eine Frontplatte 18 auf, die in das dem freien Ende entgegengesetzte Ende 19 des Gehäuses eingesetzt, bzw. eingepresst ist und die Abschlusswand des Gehäuses bildet. Das Anschlagstück 15 ist aus den gleichen Materialien hergestellt wie das Matrizengehäuse, der Lamelleneinsatz oder die Patrize.

Durch das Anschlagstück ist gewährleistet, dass die Patrize stets in die exakt gleiche Position in der Matrize eingesetzt wird, während der Lamelleneinsatz eine stufenlose und genaue Einstellung der Retentionskraft und eine genaue Anpassung an verschiedene Verhältnisse ermöglicht.

In Figur 4 ist eine Ausführungsvariante dargestellt, mit welcher es möglich ist, die zwischen Matrize und Patrize wirkenden Kräfte zu dämpfen. Diese Dämpfung wird durch ein Dämpfungselement 20 erzielt, das beispielsweise ein für solche Zwecke geeigneter O-Ring sein kann. Im Vergleich zum Anschlagstück 15 von Figur 3 weist der zylindrische Körper des Anschlagstücks 21 einen Absatz 31 mit einem zylindrischen Teil 25 mit kleinerem Durchmesser auf, um den das Dämpfungselement 20 angeordnet ist. Das Dämpfungselement befindet sich somit zwischen dem Absatz des Anschlagstücks und der Abschlusswand 22 des Matrizen-gehäuses 23 der Matrize 24.

Das Schraubteil 30 des Lamelleneinsatzes 26 weist innen eine Ausnehmung 27 auf, um Platz für das Dämpfungselement 20 zu schaffen. Im übrigen ist der Lamelleneinsatz gleich ausgeführt wie beim vorhergehenden Beispiel. Das Anschlagstück 21 weist an seinem der sphärischen Oberfläche 17 entgegengesetzten Ende einen Zapfen 28 auf, der derart in einer Bohrung 29 in der Abschlusswand 22 eingepasst ist, dass er darin gleiten kann. Das innere Teil mit der sphärischen Oberfläche 17 von Anschlagstück 21 ist gleich gearbeitet wie gemäss dem vorhergehenden Beispiel.

Aus der Beschreibung und Figur 4 geht hervor, dass das Dämpfungselelement 20 gleichzeitig als Bremse beim Einsetzen der Patrize und als Dämpfungselement oder Puffer bei Kaubewegungen dient sowie, als dritte Funktion, als Dichtungselement, um zu verhindern, dass Verunreinigungen in die Prothese gelangen können.

## Patentansprüche

1. Verankerung für die Dentalprothetik, mit einer Patrize (1) mit einem Kugelkopf (3) und einer Matrize (4, 24), wobei die Matrize (4, 24) ein Innengewinde (9) und einen den Kugelkopf (3) der Patrize aufnehmenden und zurückhaltenden, mit einem Gewinde (8) versehenen Lamelleneinsatz (5, 26) enthält, der in die Matrize einschraubbar ist, **dadurch gekennzeichnet, dass** die Patrize an einem Zahn befestigbar und die Matrize mit einer Zahnprothese verbindbar sind und die Innenfläche (11) der Matrize (4, 24), an der das Retentionsteil (12) mit Lamellen des Lamelleneinsatzes anliegt, sich konisch von ihrem freien Ende (10) zum Inneren verengt, um die Rückhaltekraft des Lamelleneinsatzes bei dessen Drehen in der Matrize stufenlos einzustellen.

2. Verankerung nach Anspruch 1, **dadurch gekennzeichnet, dass** die Matrize (4, 24) ein Anschlagstück (15, 21) aufweist, das innerhalb des Lamelleneinsatzes angeordnet ist und eine sphärische Oberfläche (17) als Anschlag für den Kugelkopf (3) aufweist.

3. Verankerung nach Anspruch 2, **dadurch gekennzeichnet, dass** das Anschlagstück (15) eine Frontplatte (18) aufweist, die an dem dem freien Ende (10) entgegengesetzten Ende (19) des Gehäuses (13) eingesetzt ist und dessen Abschlusswand bildet.

4. Verankerung nach Anspruch 2 **dadurch gekennzeichnet, dass** das Anschlagstück (21) gleitbar im Matrizen-Gehäuses (23) angeordnet ist und zwischen dem Anschlagstück und dem Matrizen-Gehäuse ein Dämpfungselement (20) angeordnet ist.

5. Verankerung nach Anspruch 4, **dadurch gekennzeichnet, dass** das Anschlagstück (21) einen zylindrischen Körper mit einem Absatz (27) und einem in einer Bohrung (29) in der Abschlusswand (22) des Gehäuses (23) gleitbaren Zapfen (28) aufweist, wobei das Dämpfungselement (20) zwischen dem Absatz (27) und der Abschlusswand (22) angeordnet ist.

6. Verankerung nach einem der Ansprüche 1 bis 5, **dadurch gekennzeichnet, dass** der Lamelleneinsatz (5, 26) drei bis zum Gewinde (8) reichende Schlitze (6) und einen durchgehenden Schlitz (7) aufweist.

7. Verankerung nach einem der Ansprüche 1 bis 6, **dadurch gekennzeichnet, dass** die Patrize und die Matrize mit ihren Teilen aus einer Dentallegierung oder aus Reintitan gefertigt sind.

## Claims

1. Anchor for dental prosthetics, comprising a male part (1) having a ball head (3) and a female part (4, 24), the female part (4, 24) having an internal thread (9) and a lamellae insert (5, 26) provided with a threaded portion (8) for receiving and retaining the ball head (3) of the male part that is screwable into the female part, **characterised in that** the male part is attachable to a tooth and the female part is connectable to a dental prosthesis, and **in that** the inner surface (11) of the female part (4, 24), on which the lamellae retention portion (12) of the lamellae insert is resting, tapers conically from its free end (10) toward its interior in order to continuously adjust the retention force of the lamellae insert when it is rotated inside the female part.

2. Anchor according to claim 1, **characterised in that** the female part (4, 24) comprises a stop member (15, 21) that is arranged inside the lamellae insert and has a spherical surface (17) serving as a stop for the ball head (3).

3. Anchor according to claim 2, **characterised in that** the stop member (15) has a front plate (18) that is inserted at the end (19) opposite the free end (10) of the housing (13) and forms the end wall of the latter.

4. Anchor according to claim 2, **characterised in that** the stop member (21) is slidable in the housing (23) of the female part and a damping member (20) is arranged between the stop member and the housing of the female part.

5. Anchor according to claim 4, **characterised in that** the stop member (21) has a cylindrical body with a stepped portion (27) and a peg (28) that is slidable in a bore (29) in the end wall (22) of the housing (23), the damping member (20) being arranged between the stepped portion (27) and the end wall (22).

6. Anchor according to one of claims 1 to 5, **characterised in that** the lamellae insert (5, 26) has three slots (6) extending up to its threaded portion (8) and one through-going slot (7).

7. Anchor according to one of claims 1 to 6, **characterised in that** wherein the male part and the female part and their component parts are manufactured from a dental alloy or from pure titanium.

## Revendications

1. Ancrage pour la prothétique dentaire, comprenant une partie mâle (1) munie d'une tête sphérique (3) et une partie femelle (4, 24), la partie femelle (4, 24) comprenant un taraudage (9) et une insertion à lamelles (5, 26) munie d'un filetage (8) qui loge et retient la tête sphérique (3) de la partie mâle et qui est vissable dans la partie femelle, **caractérisé en ce que** la partie mâle est attachable à une dent et la partie femelle à une prothèse dentaire, et que la surface intérieure (11) de la partie femelle (4, 24), sur laquelle repose la partie rétentive (12) munie de lamelles de l'insertion à lamelles, se rétrécit en forme conique à partir de son extrémité libre (10) vers l'intérieur afin de régler de manière continue la force de rétention de l'insertion à lamelles lorsque celle-ci est tournée dans la partie femelle.

2. Ancrage selon la revendication 1, **caractérisé en ce que** la partie femelle (4, 24) comprend une pièce de butée (15, 21) qui est agencée à l'intérieur de l'insertion à lamelles et présente une surface sphérique (17) comme butée pour la tête sphérique (3).

3. Ancrage selon la revendication 2, **caractérisé en ce que** la pièce de butée (15) comprend une plaque frontale (18) qui est insérée dans l'extrémité (19) opposée à l'extrémité libre (10) du boîtier (13) et forme la paroi de fermeture de ce dernier.

4. Ancrage selon la revendication 2, **caractérisé en ce que** la pièce de butée (21) peut glisser dans le boîtier (23) de la pièce femelle et qu'un élément d'amortissement (20) est agencé entre la pièce de butée et le boîtier de la pièce femelle.

5. Ancrage selon la revendication 4, **caractérisé en ce que** la pièce de butée (21) comprend un corps cylindrique avec un épaulement (27) et un tenon (28) pouvant glisser dans un perçage (29) dans la paroi de fermeture (22) du boîtier (23), l'élément d'amortissement (20) étant agencé entre l'épaulement (27) et la paroi de fermeture (22).

6. Ancrage selon l'une des revendications 1 à 5, **caractérisé en ce que** l'insertion à lamelles (5, 26) présente trois fentes (6) qui s'étendent jusqu'au filetage (8) et une fente traversante (7).

7. Ancrage selon l'une des revendications 1 à 6, **caractérisé en ce** la partie mâle et la partie femelle et leurs éléments sont fabriquées à partir d'un alliage dentaire ou de titane pur.
